Europäisches Patentamt

European Patent Office

Office européen des brevets

(11) Veröffentlichungsnummer: **0 297 425**
**A2**

## (12) EUROPÄISCHE PATENTANMELDUNG

(21) Anmeldenummer: **88109975.8**

(22) Anmeldetag: **23.06.88**

(51) Int. Cl.⁴: **B01J 8/24**

(30) Priorität: **30.06.87 DE 3721476**

(43) Veröffentlichungstag der Anmeldung:
**04.01.89 Patentblatt 89/01**

(84) Benannte Vertragsstaaten:
**AT BE CH DE GB IT LI NL SE**

(71) Anmelder: **BBC Brown Boveri**
**Aktiengesellschaft**
**Kallstadter Strasse 1**
**D-6800 Mannheim 31(DE)**

(72) Erfinder: **Steinstrasser, Frank,Dr.**
**Hölkeskampring 169**
**D-4690 Herne 1(DE)**

(74) Vertreter: **Rupprecht, Klaus, Dipl.-Ing. et al**
**c/o BBC Brown Boveri Aktiengesellschaft**
**ZPT Postfach 100351 Kallstadter Strasse 1**
**D-6800 Mannheim 1(DE)**

(54) **Verfahren zum Regeln der Wirbelbetthöhe in einem Pyrolysereaktor sowie Anordnung zur Durchführung des Verfahrens.**

(57) In einem Pyrolysereaktor (10), der für die Zersetzung von Kohlenwasserstoffe enthaltendem Abfallmaterial vorgesehen ist, wird die Wirbelbetthöhe h durch eine Messung der Temperaturdifferenz zwischen dem Wirbelbett (30) und dem sich über dem Wirbelbett ausbildenden Gasraum (34) erfaßt und im Falle einer Abweichung von dem vorgesehenen Sollwert der Wirbelbetthöhe h die Förderleistung jener Austragvorrichtung (16) beeinflußt, die für die Entfernung des Pyrolyserückstands aus dem Pyrolysereaktor (10) vorgesehen ist.

Hierdurch wird mit geringem Aufwand die Wirbelbetthöhe h konstant gehalten.

Fig. 1

EP 0 297 425 A2

## Verfahren zum Regeln der Wirbelbetthöhe in einem Pyrolysereaktor sowie Anordnung zur Durchführung des Verfahrens

Die Erfindung betrifft ein Verfahren zum Regeln der Wirbelbetthöhe in einem Pyrolysereaktor, in dem Kohlenwasserstoffe enthaltendes, insbesondere Gummi und/oder Kunststoffe enthaltendes Abfallmaterial in einem Wirbelbett thermisch zersetzt und der verbleibende Pyrolyserückstand durch eine Austragvorrichtung aus dem Pyrolysereaktor entfernt wird. Ferner betrifft die Erfindung eine Anordnung zur Durchführung des Verfahrens.

Die Höhe oder Dicke des Wirbelbettes in einem Pyrolysereaktor wird durch den Massenstrom bestimmt, der durch den Pyrolysereaktor geführt wird. Der Massenstrom umfaßt das Abfallmaterial, das für die Ausbildung des Wirbelbettes erforderliche feinkörnige Wirbelmaterial wie z.B. Sand sowie pulverförmige Zuschlagstoffe zur Bindung von Schadstoffen. Da eine vorbestimmte Wirbelbetthöhe für einen wirtschaftlichen Betrieb des Pyrolysereaktors eingehalten werden muß und andererseits genügend freier Raum über dem Wirbelbett verbleiben muß. um dem Wirbelbett genügend Raum für seine Ausbildung zu geben, ist eine Regelung der Wirbelbetthöhe erfoderlich. Aus dem Stand der Technik ist bekannt, die Lage der Wirbelbettoberfläche durch eine Differenzdruckmessung zu bestimmen und den Antrieb eines Zellenrades. durch das Wirbelsand dem Pyrolysereaktor zugeführt wird, zu beeinflussen (DE-A-29 20 383). Hierdurch läßt sich die vorbestimmte Wirbelbetthöhe nur unvollständig einhalten. da die vorgenannten übrigen Komponenten des Massenstromes einen erheblichen Einfluß auf die Wirbelbetthöhe haben. Hinzu kommt noch, daß Druckdifferenzmessungen an dem Wirbelbett, das eine Temperatur von 400 bis 1000° C aufweist. infolge von thermisch bedingtem Auftrieb in den Meßleitungen mit erheblichen Fehlern belastet sein können.

Der Erfindung liegt daher die Aufgabe zugrunde, ein Verfahren der eingangs genannten Art anzugeben, das die Nachteile des Standes der Technik überwindet und das es gestattet, die Wirbelbetthöhe mit ausreichender Genauigkeit zu regeln. Darüber hinaus soll der Gesamtbetrieb der Anlage vereinfacht sein. Ferner ist es Aufgabe der Erfindung eine Anordnung zur Durchführung des Verfahrens anzugeben, die mit hoher Betriebssicherheit arbeitet und den auftretenden Belastungen voll gewachsen ist.

Die Lösung dieser Aufgabe besteht für ein Verfahren der eingangs genannten Art darin, daß der Istwert der Wirbelbetthöhe h durch eine Messung der Temperaturdifferenz zwischen dem Wirbelbett und dem über dem Wirbelbett angeordneten Gasraum erfaßt wird, und daß im Falle einer Abweichung des Istwerts von einem voreinstellbaren Sollwert der Wirbelbetthöhe die Förderleistung der Austragvorrichtung zum Ausgleich der Abweichung selbsttätig verändert wird.

Es wird von der Erkenntnis ausgegangen, daß das Wirbelbett heißer ist als der Gasraum darüber, insbesondere um 60 bis 120° C, und daß sich diese Temperaturdifferenz für die Bestimmung der Oberfläche des Wirbelbettes und damit für die Bestimmung der Wirbelbetthöhe einsetzen läßt. Die Messung einer Temperaturdifferenz läßt sich ohne großen Aufwand und weitgehend frei von Störeinflüssen und Meßfehlern selbst bei hohem Temperaturniveau hinreichend genau durchführen. Hierdurch bereitet es keine Schwierigkeiten, die Betthöhe auf den Sollwert einzuregeln. Hierbei sind Abweichungen vom Sollwert von höchstens 1/20 des lichten Durchmessers des Pyrolysereaktors unschädlich. Durch die Beeinflussung der Förderleistung der Austragvorrichtung wird bei vorzugsweise konstanter Zugabe von Abfallmaterial, Wirbelsand und Zuschlagstoffen die Wirbelbetthöhe auf sehr einfache Weise konstant gehalten und darüber hinaus ein gleichmäßiger Austrag des Pyrolyserückstands. der mit Wirbelsand und unverbrauchten Zuschlagstoffen vermischt ist. bewirkt. Insgesamt gesehen führt das erfindungsgemäße Verfahren zu einer Verbesserung des Betriebes.

Für eine ausreichende Regelgenauigkeit genügt es. wenn die Temperaturdifferenz zwischen Meßpunkten gemessen wird, die mit Abstand in verschiedenen Höhenlagen angeordnet sind. Eine wesentliche Vereinfachung ist hierbei dann gegeben. wenn die Temperaturdifferenzen nur im Bereich des vorgesehenen Sollwertes der Wirbelbetthöhe gemessen werden.

Eine besonders bevorzugte Anordnung zur Durchführung des vorgenannten Verfahrens mit einem Pyrolysereaktor, der ein Wirbelbett und einen darüber angeordneten Gasraum aufweist und der eine elektrisch angetriebene Förder schnecke für den Austrag des Pyrolyserückstands aufweist ist dadurch gekennzeichnet, daß im Übergangsbereich vom Wirbelbett zu dem Gasraum mehrere Thermoelemente mit vertikalem Abstand übereinander angeordnet sind. daß ein erstes Thermoelement. das als Referenzelement dient, dauernd vom Wirbelbett beaufschlagt ist, daß die übrigen Thermoelemente, die als Meßelemente dienen, mit dem Referenzelement zur Bildung von Differenzspannungen zwischen den einzelnen Meßelementen und dem Referenzelement zusammengeschaltet sind, daß die einzelnen Differenzspannungen einer Auswerteschaltung zugeführt werden, daß in der Auswerteschaltung jeweils jener Differenzspannung, die eine Temperaturdifferenz zwischen Wirbelbett und Gasraum signalisiert, ein elektrisches Ausgangssignal zugeordnet wird, dessen Größe ein Maß für die Wirbelbetthöhe ist, und daß das elektrische Ausgangssignal an eine Istwert-Sollwert-Vergleichsstelle eines Regelgerätes abgegeben wird, dessen Ausgang mit einem Leistungsstellglied der Förderschnecke verbunden ist.

Die Temperaturen des Wirbelbettes und des Gasraumes werden also durch Thermoelemente gemessen, wobei mindestens ein Thermoelement als Referenzelement und die übrigen Thermoelemente als Meßelemente dienen. Aus den Thermospannungen der Meßelemente und des Referenzelementes wird die Differenz gebildet. Aus der Höhenlage des Meßelements, das zusammen mit dem Referenzelement eine Spannungsdifferenz abgibt, welche der Temperaturdifferenz zwischen Wirbelbett und Gasraum entspricht, wird der Istwert der Wirbelbetthöhe bestimmt. Bei einer Abweichung des Istwertes vom vorgegebenen Sollwert wird dann das Leistungsstellglied der Förderschnecke beeinflußt, das die Drehzahl der Förderschnecke bestimmt. Die Förderleistung der Förderschnecke wird somit zur Einhaltung des vorgegebenen Sollwertes der Wirbelbetthöhe verändert.

Eine einfache Weiterbildung der Erfindung besteht vorteilhaft darin, daß die Auswerteschaltung mit steuerbaren Schaltern versehen ist, von denen jeder einen Steueranschluß aufweist, daß jedem Meßelement ein Steueranschluß zugeordnet ist, dem die mit Hilfe des Referenzelements gebildete Differenzspannung zuführbar ist, daß die steuerbaren Schalter beim Überschreiten eines voreingestellten Grenzwertes der Differenzspannung durchschalten und eine konstante Eingangsspannung an jeweils einen Widerstand eines Spannungsteilers weiterleiten, daß am Ende des Spannungsteilers ein Abschlußwiderstand vorgesehen ist, an dem das elektrische Ausgangssignal, welches die Wirbelbetthöhe abbildet, in Form einer Ausgangsspannung abnehmbar ist. Als steuerbare Schalter sind zweckmäßig Feldeffekttransistoren vorgesehen.

Um die Höhenlage der Thermoelemente zu fixieren und deren Anordnung im Pyrolysereaktor zu vereinfachen, sind zweckmäßig die Thermoelemente in der Wand eines Schutzrohres angeordnet, das durch die Wand des Pyrolysereaktors von oben nach unten bis in den Übergangsbereich zwischen Wirbelschicht und Gasraum geführt ist. Um den Aufwand hierbei auf das erforderliche Maß zu beschränken, empfiehlt es sich, daß der Abstand zwischen den Thermoelementen ungefähr 1/30 bis 1/10 der lichten Weite des Pyrolysereaktors beträgt. Da das Wirbelbett sich wie eine kochende Flüssigkeit verhält, ist seine Oberfläche nicht ruhig oder glatt, die Oberfläche weist vielmehr Vorsprünge auf, die sich zeitlich und örtlich dauernd ändern. Die Höhe dieser Vorsprünge beträgt ungefähr 1/30 bis 1/10 der lichten Weite des Pyrolysereaktors, der vertikale Abstand der Thermoelemente sollte daher zweckmäßig ungefähr die gleiche Größe aufweisen.

Weitere Vorteile und Merkmale der Erfindung gehen aus der folgenden Beschreibung eines Ausführungsbeispiels im Zusammenhang mit den schematischen Zeichnungen hervor.

Hierbei zeigt:

Figur 1 einen Wirbelbett-Pyrolysereaktor in vertikalem Zentralschnitt in Verbindung einer Regelanordnung, die für die Durchführung des erfindungsgemäßen Verfahrens geeignet ist,

Figur 2 den Bereich II der Fig. 1 als Einzelheit und in größerer Darstellung und

Figur 3 den Bereich III der Fig. 2 im Schnitt und in größerer Darstellung in Verbindung mit der Auswerteschaltung.

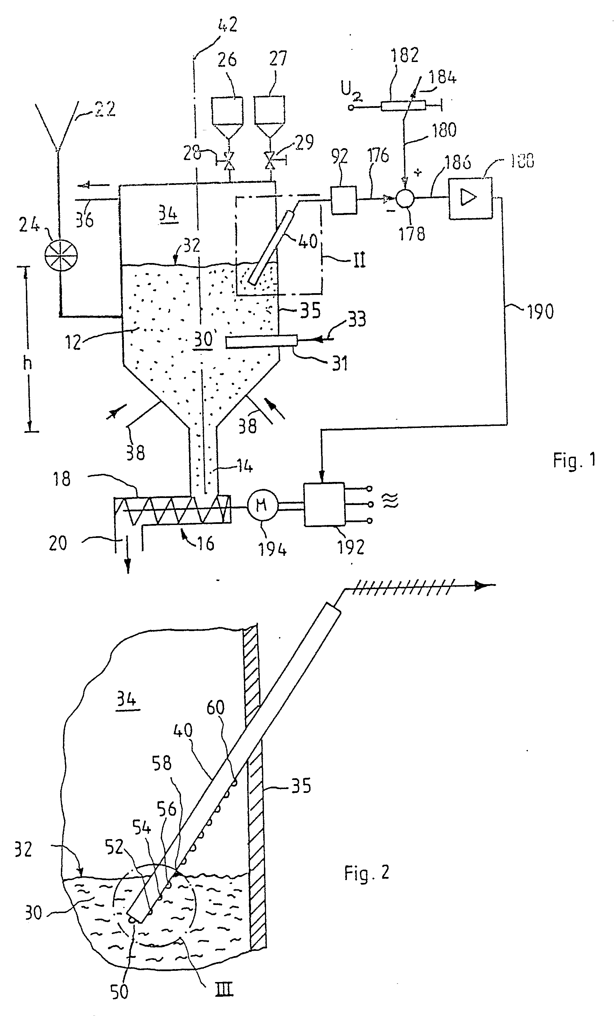

In Fig. 1 ist ein stehender Pyrolysereaktor 10 dargestellt, dessen Innenraum 12 im oberen Bereich kreiszylindrisch ausgebildet ist. Nach unten verjüngt sich der Innenraum 12 kreiskegelförmig und geht in ein vertikal verlaufendes Austragrohr 14 über. Am unteren Ende des Austragrohres 14 ist eine Austragvorrichtung 16 angeschlossen, die aus einer ungefähr horizontal verlaufenden Förderschnecke 18 besteht. Der Ausgang 20 der Förderschnecke mündet nach unten in einen nicht dargestellten Aufnahmebehälter.

Seitlich des Pyroylsereaktors 10 ist ein Trichter 22 vorgesehen, der unter Zwischenschaltung einer Zellenradschleuse 24 mit dem Wirbelbett 30 verbunden ist. Der Trichter 22 dient zur Aufgabe des Abfallmaterials. Oberhalb des Pyrolysereaktors ist ein Behälter 26 angeordnet, der für die Aufnahme von pulverförmigen Zuschlagstoffen vorgesehen ist. Der Behälter 26 ist unter Zwischenschaltung eines Regel- und Absperrorgans 28 an den Innenraum 12 angeschlossen. Desweiteren ist noch ein Behälter 27 oberhalb des Pyrolysereaktors angeordnet, der für die Aufnahme von feinkörnigem Wirbelmaterial, zweckmäßig Sand, vorgesehen ist. Dieser Behälter 27 ist mit dem Innenraum 12 verbunden, wobei ein Regel- und Absperrorgan 29 in die Verbindung eingefügt ist.

Da das Wirbelbett 30 nicht den gesamten Innenraum 12 ausfüllt und eine Oberfläche 32 aufweist, verbleibt oberhalb des Wirbelbettes 30 ein Gasraum 34, dessen Höhe ungefähr das 0,5 bis 1-fache der lichten Weite des Pyrolysereaktors beträgt. An diesen Gasraum 34 ist eine Rohrleitung 36 angeschlossen, durch die das entstandene Pyrolysegas abgezogen wird. In den unteren, kreiskegelförmigen Bereich des Innenraums 12 münden Rohre 38, durch die das für die Erzeugung des Wirbelbettes erforderliche gasförmige Wirbelmedium, vorzugsweise Pyrolysegas, zugeführt wird.

Im Wirbelbett 30 sind noch mehrere Heizrohre 31 angeordnet, die durch Heizgas befeuert werden. Das Heizgas wird durch die Rohrleitung 33 zugeführt. In der Zeichnung ist nur ein einziges Heizrohr gezeigt.

In das Wirbelbett 30 taucht ein Schutzrohr 40 von oben her ein, in dessen Wand Thermoelemente angeordnet sind. Das Schutzrohr hat einen Durchmesser von 5 bis 15 cm, die Thermoelemente sind innerhalb des Pyrolysereaktors angeordnet. Die nähere Anordnung und Ausbildung dieses Schutzrohres wird später erläutert. Das Schutzrohr ist von außen durch die Seitenwand des Pyrolysereaktors unter einem Winkel von 20 bis 30° gegenüber der vertikalen Zentralachse 42 gasdicht in den Innenraum 12 eingeführt und an der Seitenwand 35 befestigt. Das Schutzrohr 40 durchdringt hierbei den Gasraum 34 und endet im Wirbelbett 30. Es taucht hierbei in vertikaler Richtung gesehen, ungefähr das 0,1 bis 0,2-fache des lichten Durchmessers des Pyrolysereaktors in das Wirbelbett 30 ein. Auf alle Fälle muß es soweit eintauchen, daß wenigstens das untere Ende des Schutzrohres 40 sich im Wirbelbett befindet, auch dann, wenn Schwankungen in der Höhe des Wirbelbettes auftreten.

In Fig. 2 ist das Schutzrohr und sein Einbau als Einzelheit und in größerer Darstellung gezeigt. Man erkennt daß ein erstes Thermoelement 50, das als Referenzelement dient, am unteren Ende des Schutzrohres 40, vorzugsweise an seinem Boden 62 angeordnet ist. Entlang einer geraden Mantellinie des Schutzrohres 40 sind weitere Thermoelemente mit gegenseitigem Abstand vorgesehen, es sind dies, vom unteren Ende des Schutzrohres beginnend, das zweite Thermoelement 52, das dritte Thermoelement 54, das vierte Thermoelement 56, das fünfte Thermoelement 58 usw. bis zum zwölften Thermoelement 60. Im vorliegenden Beispiel befindet sich die Oberfläche 32 des Wirbelbettes in einer Höhenlage zwischen dem vierten Thermoelement 56 und dem fünften Thermoelement 58. Diese Höhenlage der Oberfläche 32 stellt sich im Normalbetrieb der Anlage ein und sie bestimmt die Höhe h des Wirbelbettes 30, die ausgehend von der Anschlußstelle des Austragrohres 14 an dem Pyrolysereaktor bis zur Oberfläche 30 gemessen wird. Die hier angegebene Höhe des Wirbelbettes 30 soll im vorliegenden Ausführungsbeispiel den Sollwert der Wirbelbetthöhe h bilden (vgl. Figur 1). Der gegenseitige Abstand der Thermoelemente beträgt im vorliegenden Falle ungefähr 10 cm. Aus dem oberen Ende des Schutzrohres, das sich außerhalb des Pyrolysereaktors 10 befindet, sind die elektrischen Anschlußleitungen der Thermoelemente herausgeführt.

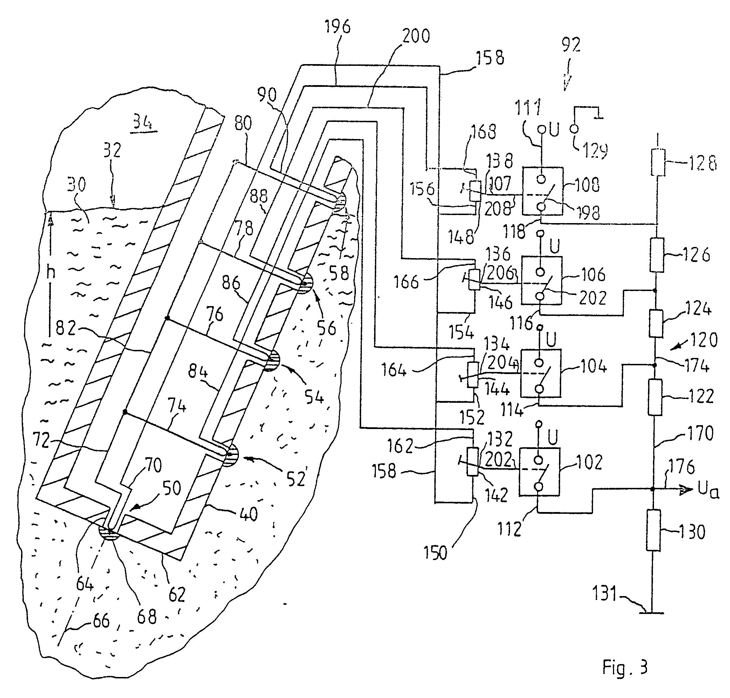

In Fig. 3 ist der untere Endbereich des kreisringförmigen, metallischen Schutzrohres 40 im vertikalen Zentral schnitt und in gegenüber Figur 2 größerer Darstellung als Einzelheit gezeigt. Am Boden 62, der das Schutzrohr unten verschließt, ist ungefähr zentrisch eine in Richtung der Längsachse 66 des Schutzrohres 40 verlaufende Bohrung 64 angebracht. Diese Bohrung 64 ist auf der Außenseite des Schutzrohres 40 durch eine kuppen- oder halbkugelförmige Metallwarze 68 verschlossen, die durch Schweißen aufgebracht worden ist. Als Metall für die Metallwarze 68 dient Kupfer oder Stahl. In dieser Metallwarze 68 ist das Ende des ersten Thermoelements 50 eingebettet, das Ende ist in der Metallwarze eingeschweißt. Das heißt, die beiden Schenkel 70 und 72 des ersten Thermoelements 50 sind in der Metallwarze 68 miteinander verbunden und erfassen die Temperatur dieser Metallwarze, die Metallwarze stellt somit einen Temperatur-Meßpunkt dar. Da die Metallwarze im Wirbelbett 30 angeordnet und daher vom Wirbelbett beaufschlagt wird, erfaßt sie die Temperatur des Wirbelbettes.

Ausgehend vom Boden 62 sind auf einer geraden Mantellinie des Schutzrohres 40 die weiteren Thermoelemente 52 bis 60 auf die gleiche Weise mit gleichmäßigem Abstand übereinander angeordnet. In Figur 3 sind der Übersicht wegen nur das zweite, dritte, vierte und fünfte Thermoelement gezeigt, obwohl mehr Thermoelemente vorgesehen sind, wie aus Fig. 2 zu erkennen ist. Wie sich weiter aus Figur 3 erkennen läßt, verläuft die Oberfläche der Wirbelschicht zwischen dem vierten Thermoelement 56 und dem fünften Thermoelement 58.

Wie bereits gesagt, besitzt jedes Thermoelement zwei drahtförmige Schenkel, von denen bei Erwärmung der Meßpunkte ein Schenkel positive elektrische Spannung, der andere Schenkel dagegen negative Spannung führt. Dementsprechend werden diese Schenkel als positive Schenkel bzw. negative Schenkel bezeichnet. Die positiven Schenkel 72,74,76,78,80 der Thermoelemente 50,52,54,58 sind durch eine elektrische Leitung 82 miteinander verbunden. Durch diese Verbindung wird erreicht, daß die Temperaturdifferenzen zwischen dem ersten Thermoelement 50 (Re ferenzelement) und den übrigen Thermoelementen 52 bis 58 erfaßt werden. Die übrigen Thermoelemente 52 bis 58 dienen im vorliegenden Fall als Meßelemente. Die Verbindung der einzelnen positiven Schenkel kann innerhalb des Schutzrohres 40 erfolgen. Zweckmäßig ist es jedoch, diese Schenkel nach außen zu führen und dort zu verbinden.

Die negativen Schenkel 70,84,86,88,90 der Thermoelemente sind nach außen zu einer elektrischen Auswerteschaltung 92 geführt, die in einem nicht dargestellten Gehäuse angeordnet ist. Diese Auswerteschaltung weist soviel steuerbare elektrische Schalter 102,104,106,108, usw. auf, wie Temperatur-Meßpunkte im Schutzrohr 40 vorgesehen sind. Da in Figur 3 der Übersicht wegen lediglich vier Temperatur-Meßpunkte, nämlich die Thermoelemente 52,54,56 und 58, im Schutzrohr dargestellt sind, sind dementsprechend vier steuerbare Schalter gezeigt. An den Eingang 111 eines jeden steuerbaren Schalters ist eine konstante elektrische Spannung U gleicher Größe angelegt, die einer nicht dargestellten Gleichspannungsquelle entnommen wird. Der zweite Pol 129 dieser Spannungsquelle ist mit dem Punkt 131 verbunden. Die Ausgänge 112,114,116,118 usw. der einzelnen steuerbaren Schalter sind an die einzelnen elektrischen Widerstände 122,124,126,128 usw. eines elektrischen Spannungsteilers 120 angeschlossen. Die einzelnen Widerstände 122 bis 128 des Spannungsteilers sind untereinander gleich und der Anschluß der Ausgänge 112 bis 118 erfolgt jeweils derart, daß sich jeweils ein Widerstand des Spannungsteilers zwischen zwei Ausgängen benachbarter steuerbarer Schalter befindet, wie dies eindeutig aus Figur 3 zu ersehen ist. Der Abschlußwiderstand 130 des Spannungsteilers besitzt vorzugsweise den gleichen Widerstandswert wie die einzelnen Widerstände 122 bis 128. Das untere Ende des Abschlußwiderstandes 130 ist mit dem Punkt 131 verbunden.

Die Steueranschlüsse 202,204,206,208 usw. der einzelnen steuerbaren Schalter 102 bis 108 usw. sind jeweils mit dem Schleifer 132,134,136,138 eines Potentiometers 142,144,146,148 usw. verbunden. Die in der Zeichnung unteren Ausgangsklemmen 150,152,154,156 der einzelnen Potentiometer sind an eine gemeinsame Leitung 158 angeschlossen, die zu dem negativen Schenkel 70 des ersten Thermoelementes 50 führt, das als Referenzelement dient. Die Eingangsklemmen 162,164,166,168 der Potentiometer sind jeweils an den negativen Schenkel eines Meßelements angeschlossen. Der Anschluß erfolgt hierbei so, daß das zweite Thermoelement 52, welches dem Referenzelement 50 benachbart ist, an die Eingangsklemme 162 des Potentiometers 142 angeschlossen ist. Das Potentiometer 142 ist mit jenem steuerbaren Schalter 102 verbunden, dessen Ausgang 112 an die Verbindungsleitung 170 zwischen dem Abschlußwiderstand 130 und dem Widerstand 122 angeschlossen ist. Auf die gleiche Weise ist das dritte Thermoelement 54 an das Potentiometer 144 angeschlossen, das mit dem steuerbaren Schalter 104 verbunden ist. Der Ausgang 114 dieses Schalters ist an die Verbindungsleitung 174 zwischen den Widerständen 122 und 124 angeschlossen. Auf die gleiche Weise sind die übrigen Thermoelemente mit den übrigen steuerbaren Schaltern verbunden, wie dies eindeutig aus Fig. 3 hervorgeht. Aus Figur 3 ist weiter zu ersehen, daß die Zuordnung der einzelnen Thermoelemente 52 bis 58 zu den einzelnen steuerbaren Schaltern 102 bis 108 usw. derart erfolgt, daß das am Schutzrohr 40 unterste Meßelement 52 mit jenem steuerbaren Schalter 102 verbunden ist, dessen Ausgang an das untere Ende des Spannungsteilers 120 angeschlossen ist. Das nächsthöher gelegene dritte Thermoelement 54 ist in Wirkverbindung mit dem nächsten Widerstand 122 des Spannungsteilers 120. Die Zuordnung der weiteren Thermoele mente geschieht auf die gleiche Weise. Hierzu wird ausdrücklich auf das Schaltbild der Figur 3 verwiesen.

Die elektrische Verbindungsleitung 170, an der jene elektrische Spannung abgreifbar ist, die an dem Abschlußwiderstand 130 anfällt und die als Ausgangsspannung $U_a$ bezeichnet wird, wird durch eine elektrische Leitung 176 einer Vergleichstelle 178 zugeführt (siehe Figur 1). An dieser Vergleichsstelle 178 wird der durch die elektrische Leitung 176 zugeführte Spannungs-Istwert mit einem Spannungs-Sollwert verglichen, der als elektrische Spannung durch eine elektrische Leitung 180 der Vergleichsstelle 178 zugeführt wird. Für die Einstellung des Sollwertes ist ein Sollwertsteller 182 vorgesehen, der als Potentiometer ausgebildet ist. Dem Eingangsollwertsteller 180 wird eine konstante elektrische Spannung $U_2$ zugeführt. Mit dem verstellbaren Schleifer 184 des Potentiometers kann am Sollwertgeber eine Spannung eingestellt werden, die an die elektrische Leitung 180 als Sollwert abgegeben wird. Die als Sollwert zugeführte elektrische Spannung ist der Sollwert für die Wirbelschichthöhe h.

Der Ausgang der Vergleichsstelle 178 ist durch die elektrische Leitung 186 mit dem elektrischen Regelgerät 188 verbunden, das zugleich auch als elektrischer Verstärker ausgebildet ist. Der Ausgang des Regelgeräts 188 ist durch die elektrische Leitung 190 mit dem Leistungsstellglied 192 verbunden. Durch dieses Leistungsstell glied 192 ist die Drehzahl des Elektromotors 194 veränderbar, der die Förderschnecke 18 antreibt. Das Leistungsstellglied ist zweckmäßig als Stromrichter ausgebildet.

Während des Betriebs der Anlage wird durch den Trichter 22 und die Zellenradschleuse 24 kleinstückiges Abfallmaterial in den Pyrolysereaktor 10 eingebracht. Gleichzeitig werden von den Behältern 26 und 27 Zuschlagstoffe und feinkörniger Sand dem Pyrolysereaktor zugeführt. Der Sand dient als Wirbelmedium, die Zuschlagstoffe zur Bindung von Schadstoffen. Als Zuschlagstoffe dienen insbesondere pulverförmiges Calciumoxid, Kalk oder Dolomit. Durch die Rohre 38 wird ein Wirbelgas, vorzugsweise erzeugtes Pyrolysegas, dem Pyrolysereaktor 10 zugeführt. Mit Hilfe dieses Wirbelgases wird der Sand im Pyrolysereaktor aufgewirbelt, so daß das Wirbelbett 30 entsteht, das sich wie eine siedende Flüssigkeit verhält. Das Wirbelbett hat demnach eine unruhige Oberfläche 32, die an den darüber verbleibenden Gasraum 34 grenzt. Der Pyrolyserückstand wird durch das Austragsrohr 14 der Austrageinrichtung 16 zugeführt, deren Förderschnecke 18 den Pyrolyserückstand dem Ausgang 20 zuführt. Durch diesen Ausgang 20 wird der Pyrolyserückstand aus der Anlage entfernt. Der Pyrolyserückstand enthält neben den eigentlichen Resten des Abfallmaterials einen Teil des Wirbelsandes, der vom Behälter 26 zugeführt wurde sowie Reste von Zuschlagstoffen.

Um das Wirbelbett und das Abfallmaterial auf die für die Pyrolyse erforderliche Temperatur von ungefähr 400 bis 1000° C zu bringen, wird das dem Pyrolysereaktor zugeführte Wirbelgas entsprechend aufgeheizt oder es werden die Heizrohre 31 in Betrieb genommen.

Das Wirbelbett 30 ist ungefähr um 60 bis 120° C heißer als das Pyrolysegas des Gasraums 34. Diese Temperaturdifferenz wird ausgenutzt zur Erfassung und Regelung der Wirbelbetthöhe h des Pyrolysereaktors. Die Einhaltung der vorbestimmten Wirbelbetthöhe h ist für einen wirtschaftlichen Betrieb des Pyroylsereaktors von großer Bedeutung.

Zur Erfassung der Temperaturdifferenz zwischen Wirbelbett 30 und Gasraum 34 sind die am Schutzrohr 40 angeordneten Thermoelemente bestimmt. Da für die Thermoelemente zweckmäßig die Paarung Nickel-Chrom/Nickel verwendet wird, ist einer Temperaturdifferenz von 100° C eine Thermospannung von ungefähr 4 Millivolt zugeordnet. Diese Thermospannung ergibt sich z.B. dann, wenn das Referenzelement (Thermoelement 50) innerhalb des Wirbelbettes 30 und das Meßelement im Gasraum 34 angeordnet ist und eine Temperaturdifferenz von 100° C zwischen Meß- und Referenzelement besteht.

Gemäß Figur 3 verläuft die Oberfläche 32 des Wirbelbettes 30 in einer Höhenlage zwischen dem vierten Thermoelement 56 und dem fünften Thermoelement 58. Das erste Thermoelement 50, das als Referenzelement dient, ist vollständig im Wirbelbett 30 eingetaucht und erfaßt dessen Temperatur. Es wird hier angenommen, daß zwischen dem Wirbelbett 30 und dem Gasraum 34 eine Temperaturdifferenz von 100° C vorhanden ist. Dann entsteht zwischen dem Thermoelement 50, das als Referenzelement dient, und dem Thermoelement 58, das als Meßelement eingesetzt ist und die Temperatur des Gasraumes 34 erfaßt, eine Thermospannung von 4 Millivolt. Diese Thermospannung wird durch die gemeinsame Leitung 158 und die elektrische Leitung 196 dem Potentiometer 148 zugeführt. Der Schleifer 138 des Potentiometers 148 ist so eingestellt, daß eine Teilspannung abgegriffen wird, welche das Steuerglied 198 des steuerbaren Schalters 108 bei einer zugeführten Thermospannung von 4 Millivolt betätigt und diesen Schalter schließt. Jetzt wird die dem steuerbaren Schalter 108 zugeführte elektrische Spannung U dem Spannungsteiler 120 zugeführt und es fließt ein elektrischer Strom vom Eingang 111 über die Widerstände 126,124,122 und den Abschlußwiderstand 130 zum Punkt 131. Es entsteht jetzt am Abschlußwiderstand 130 ein elektrisches Ausgangssignal $U_a$ in Form einer elektrischen Spannung, das durch die elektrische Leitung 176 der Vergleichsstelle 178 zugeführt wird (siehe Figur 1). Da das erste, zweite, dritte und vierte Thermoelement 50,52,54,56 innerhalb des Wirbelbettes 30 liegen und daher ungefähr gleiche Temperatur besitzen, entsteht zwischen ihnen keine oder geringere Temperaturdifferenz. An den zugeordneten Potentiometern 142,152 und 154 liegt keine oder höchstens eine wesentlich geringere Spannung als 4 Millivolt an, die nicht zu einem Durchschalten eines der steuerbaren Schalter 102,104 oder 106 führen kann, da ein Durchschalten erst bei einer Spannung 4 Millivolt erfolgt.

Da der Sollwert der Wirbelschichtdicke h im vorliegenden Fall zwischen dem vierten und fünften Thermoelement 56,58 liegen soll, und dieser Sollwert in Form einer elektrischen Spannung am Sollwertgeber 182 eingestellt ist, entsteht an der Vergleichsstelle 178 kein Vergleichssignal, das zu einem Regeleingriff führen könnte. Der Elektromotor 194 treibt mit konstanter Geschwindigkeit die Förderschnecke 18 an, es besteht Gleichgewicht zwischen der Zufuhr des Abfallmaterials und dem Austrag des Pyrolyserückstandes durch die Förderschnecke 18. Hierdurch bleibt die Wirbelbetthöhe h konstanst.

Verringert sich die Pyrolysebetthöhe h, z.B. durch verringerte Zufuhr von Pyrolysematerial, so sinkt die Oberfläche 32 des Wirbelbettes ab und befindet sich z.B. zwischen dem dritten Thermoelement 54 und dem vierten Thermoelement 56. Das vierte Thermoelement 56 liegt jetzt im Gasraum 34 und weist eine z.B. um 100° C geringere Temperatur auf als das Referenzelement 50. Zwischen dem Referenzelement 50 und dem vierten Thermoelement 56 entsteht eine Thermospannung von ungefähr 4 Millivolt, die über die elektrische Leitung 200 und die gemeinsame elektrische Leitung 158 an das Potentiometer 146 gelegt wird. Dieses Potentiometer ist, genau wie alle anderen Potentiometer, so eingestellt, daß beim Anliegen dieser Thermospannung das Schaltglied des steuerbaren Schalters 106 durchschaltet und die elektrische Spannung U an den Spannungsteiler 120 gelegt wird, und zwar zwischen den Widerständen 124 und 126. Da im Spannungsteiler 120 jetzt weniger Widerstände in den Stromfluß eingeschaltet sind, fließt ein größerer Strom durch den Abschlußwiderstand 130. Es entsteht ein größerer Spannungsabfall am Abschlußwiderstand 130 und das an der elektrischen Leitung 176 anfallende Ausgangssignal $U_a$ ist gegenüber dem vorangegangenen Zustand erhöht. Dieses erhöhte Ausgangssignal bildet an der Vergleichsstelle 178 ein Regelsignal, das durch die elektrische Leitung 186 dem Regelgerät 188 zugeführt wird. Das Regelgerät verstärkt dieses Signal und gibt es durch die elektrische Leitung 190 an das Leistungsstellglied 192 weiter. Dieses verringert jetzt die Drehzahl des Elektromotors 194 und damit die Förderleistung der Förderschnecke 18 solange, bis die Pyrolysebetthöhe h wieder auf den Sollwert angestiegen ist und der steuerbare Schalter 106 öffnet.

Auf die gleiche Weise wird verfahren, wenn die Wirbelbetthöhe h ansteigen sollte. Durch die Auswerteschaltung ist jeder Pyrolysebetthöhe h eine bestimmte elektrische Ausgangsspannung $U_a$ zugeordnet, die den Istwert der Pyrolysebetthöhe h abbildet. Dieser Istwert wird dann in der vorbeschriebenen Weise zur Einregelung der Wirbelbetthöhe h benutzt.

**Ansprüche**

1. Verfahren zum Regeln der Wirbelbetthöhe in einem Pyrolysereaktor, in dem Kohlenwasserstoffe enthaltendes, insbesondere Gummi- und/oder Kunstoffe enthaltendes Abfallmaterial in einem Wirbelbett (30) thermisch zersetzt wird und der verbleibende Pyrolyserückstand durch eine Austragvorrichtung (16) aus dem Pyrolysereaktor (10) entfernt wird, dadurch gekennzeichnet, daß der Istwert der Wirbelbetthöhe h durch eine Messung der Temperaturdifferenz zwischen dem Wirbelbett (30) und dem sich über dem Wirbelbett ausbildenden Gasraum (34) erfaßt wird, und daß im Falle einer Abweichung des Istwertes von einem voreinstellbaren Sollwert der Wirbelbetthöhe h die Förderleistung der Austragvorrichtung (16) zum Ausgleich dieser Abweichung selbsttätig verändert wird.

2. Verfahren nach Anspruch 1, dadurch gekennzeichnet, daß die Temperaturdifferenz zwischen Meßpunkten gemessen wird, die in verschiedener Höhenlage angeordnet sind.

3. Verfahren nach Anspruch 1 oder 2, dadurch gekennzeichnet, daß die Temperaturdifferenz nur im Bereich des vorgesehenen Sollwerts der Wirbelbetthöhe h gemessen wird.

4. Anordnung zur Durchführung des Verfahrens nach einem der Ansprüche 1 bis 3 mit einem Pyrolysereaktor (10), der ein Wirbelbett (30) und einen darüber angeordneten Gasraum (34) aufweist und der eine elektrisch angetriebene Förderschnecke (18) für den Austrag des Pyrolyserückstands aufweist, dadurch gekennzeichnet, daß im Übergangsbereich vom Wirbelbett (30) zu dem Gasraum (34) mehrere Thermoelemente (50,52,54,56,58,60) mit vertikalem Abstand übereinander angeordnet sind, daß ein erstes Thermoelement (50) (Referenzelement) dauernd vom Wirbelbett (30) beaufschlagt ist, daß die übrigen Thermoelemente (52,54,56,58,60) (Meßelemente) mit dem Referenzelement (50) zur Bildung von Differenzspannungen zwischen den einzelnen Meßelementen (52,54,56,58,60) und dem Referenzelement (50) zusammengeschaltet sind, daß die einzelnen Differenzspannungen einer Auswerteschaltung (92) zugeführt werden, daß in der Auswerteschaltung (92) jeweils jener Differenzspannung, die eine Temperaturdifferenz zwischen dem Wirbelbett (30) und dem Gasraum (34) signalisiert, ein elektrisches Ausgangssignal zugeordnet wird, dessen Größe ein Maß für die Wirbelbetthöhe h ist, und daß das elektrische Ausgangssignal an eine Istwert-Sollwert-Vergleichsstelle (178) eines Regelgeräts (188) abgegeben wird, dessen Ausgang mit einem Leistungsstellglied (192) der Förderschnecke (18) verbunden ist.

5. Anordnung nach Anspruch 4, dadurch gekennzeichnet, daß die Auswerteschaltung (92) mit steuerbaren Schaltern (102,104,106,108) versehen ist, von denen jeder einen Steueranschluß (202,204,206,208) aufweist, daß jedem Meßelement (52,54,56,58,60) ein Steueranschluß (202,204,206,208) zugeordnet ist, dem die mit Hilfe des Referenzelements (50) gebildete Differenzspannung zuführbar ist, daß die steuerbaren Schalter (102,104,106,108) beim Überschreiten eines voreinstellbaren Grenzwertes der Differenzspannung durchschalten und eine konstante Eingangsspannung U an jeweils einen Widerstand (122,124,126,128) eines Spannungsteilers (120) weiterleiten, daß am Ende des Spannungsteilers (120) ein Abschlußwiderstand (130) vorgesehen ist, an dem das elektrische Ausgangssignal in Form einer Ausgangsspannung $U_a$ abnehmbar ist.

6. Anordnung nach Anspruch 4 oder 5, dadurch gekennziechnet, daß die Thermoelemente (50,52,54,56,58,60) in der Wand eines Schutzrohres (40) angeordnet sind, das von außen durch die Wand des Pyrolysereaktors (10) von oben nach unten in den Übergangsbereich zwischen Wirbelbett (30) und Gasraum (34) geführt ist.

7. Anordnung nach einem der Ansprüche 4 bis 6, dadurch gekennzeichnet, daß der Abstand zwischen den einzelnen Thermoelementen (50,52,54,56,58,60) ungefähr 1/30 bis 1/10 der lichten Weite des Pyrolysereaktors (10) beträgt.

Fig. 1

Fig. 2

Fig. 3